(19) Europäisches Patentamt / European Patent Office / Office européen des brevets

(11) **EP 3 399 278 A1**

(12) **EUROPEAN PATENT APPLICATION**

(43) Date of publication:
**07.11.2018 Bulletin 2018/45**

(51) Int Cl.:
***G01C 21/20*** *(2006.01)*

(21) Application number: **17169787.3**

(22) Date of filing: **05.05.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Koninklijke Philips N.V.**
**5656 AE Eindhoven (NL)**

(72) Inventors:
- **VALENTI, Giulio**
  **5656 AE Eindhoven (NL)**
- **TEN KATE, Warner Rudolph Theophile**
  **5656 AE Eindhoven (NL)**

(74) Representative: **de Haan, Poul Erik**
**Philips International B.V.**
**Philips Intellectual Property & Standards**
**High Tech Campus 5**
**5656 AE Eindhoven (NL)**

(54) **AN APPARATUS AND METHOD OF OPERATING THE APPARATUS TO PROVIDE CONTEXTUAL INFORMATION FOR A DEVICE**

(57)    There is provided an apparatus (100) and a method of operating the apparatus. The apparatus (100) comprises a processor (102) configured to acquire a time-stamped series of environmental property measurements from at least one sensor of a device and compare the time-stamped series of environmental property measurements acquired from the at least one sensor of the device to one or more time-stamped series of corresponding environmental property measurements acquired from at least one sensor that is separate from the device. The processor (102) is also configured to determine contextual information for the device based on the comparison of the time-stamped series of environmental property measurements.

Figure 6A

EP 3 399 278 A1

## Description

## Technical Field of the Invention

The invention relates to the field of devices (or, more specifically, measurement devices) and, in particular, to an apparatus and method of operating the apparatus to provide contextual information for a device.

## Background to the Invention

Many devices acquire data that can benefit from the derivation of contextual information for the device (such as location information for the device). One example of an application in which contextual information is useful is in movement analysis (for example, for fall risk detection), which can be improved by incorporating data from different sources. The derivation of contextual information often involves the synchronisation and localisation of independent measuring systems to align data from different sources and to analyse the data to derive contextual information. The synchronisation of data is normally achieved by specific protocols or by periodic alignment with a reference time system. An example of a protocol that is often used for the synchronisation of data is a Network Time Protocol (NTP). The localisation of data is normally achieved using a geo-localisation system such as a Global Positioning System (GPS), Global Navigation Satellite System (GLONASS), or similar.

There is often a need to perform synchronisation of data. For example, loss of time can occur due to a local clock of a device drifting or when a device runs out of battery and needs to reboot. If no network is available, active intervention of the user is required to implement the necessary synchronisation protocols (such as simultaneous triggers) on the device. An example of the active interaction of the user is where a device or data from the device may be synchronised by a user pressing a button on multiple devices. This requires effort on the part of the user and the same procedure must be performed each time the device or data from the device loses synchronisation, which can be difficult or even impossible to predict. Also, the required user interaction is often unreliable, especially in the case of an untrained or inexperienced user. Another form of synchronisation uses a reference time system. However, this requires an appropriate communication module (such as a Bluetooth module, a General Packet Radio Service (GPRS) module, a radio module, a WiFi module, etc) suitable to provide such a time reference to be built into the device and these modules are not always reliable or even available. Moreover, geo-localisation that can be used to localise data is power consuming and is unreliable in many daily-life contexts, such as inside buildings.

Some methods have been proposed for determining a location of a device by means of processing environmental property measurements. For example, US 2016/0245716 discloses a technique for calibrating a barometric pressure sensor of a mobile device by determining that the mobile device has returned to a frequently visited location at which an altitude is known. For example, the mobile device determines that it is located on a particular floor in a known dwelling by determining a match of received signals with signal signatures expected for receivers located on the particular floor.

However, due to the static or fixed nature of the signal signatures, only limited contextual information can be acquired on the device. As the signal signatures comprise static values, no information on the moment in time can be acquired from the signal signatures. Instead, the signal signatures are merely typical or expected signals for the device. As such, it is not possible for the device to recover lost timing from such static signal signatures. In addition, as only floor level within a building is represented in the signature, it is only possible to determine a floor level for the mobile device in the building. Moreover, the floor level that is determined is only inferred based on assumed characteristics and thus may not be accurate or reliable. It would therefore be valuable to provide a method and apparatus that allows a greater range of contextual information to be acquired for a device. It would further be valuable to provide a method and apparatus that is also capable of determining information from an earlier point in time (i.e. historical information) for the device.

Therefore, an improved method and apparatus for providing contextual information for a device is required.

## Summary of the Invention

As noted above, it would be valuable to have an improved method and apparatus for providing contextual information for a device, which overcome existing problems.

Therefore, according to a first aspect of the invention, there is provided an apparatus comprising a processor. The processor is configured to acquire a time-stamped series of environmental property measurements from at least one sensor of a device, compare the time-stamped series of environmental property measurements acquired from the at least one sensor of the device to one or more time-stamped series of corresponding environmental property measurements acquired from at least one sensor that is separate from the device, and determine contextual information for the device based on the comparison of the time-stamped series of environmental property measurements.

In some embodiments, the processor may be configured to compare the time-stamped series of environmental property measurements acquired from the at least one sensor of the device to the one or more time-stamped series of corresponding environmental property measurements in any one or more of time and space.

In some embodiments, the processor may be configured to determine contextual information for the device by determining any one or more of a relative location of the device to the at least one sensor separate from the device based on the comparison of the time-stamped series of environmental property measurements and a relative time reference for the device to the at least one sensor separate from the device based on the comparison of the time-stamped series of environmental property measurements. In some embodiments, the relative location may be a relative horizontal location.

In some embodiments, the processor may be further configured to acquire location information for the at least one sensor separate from the device and determine contextual information for the device by determining an absolute location of the device based on the comparison of the time-stamped series of environmental property measurements and the acquired location information and/or the processor may be further configured to acquire time information for the at least one sensor separate from the device and determine contextual information for the device by determining an absolute time reference for the device based on the comparison of the time-stamped series of environmental property measurements and the acquired time information.

In some embodiments, the processor may be configured to compare the time-stamped series of environmental property measurements acquired from the at least one sensor of the device to a single time-stamped series of corresponding environmental property measurements and wherein the processor may be further configured to adjust the time-stamped series of environmental property measurements acquired from the at least one sensor of the device to align the time-stamped series of environmental property measurements acquired from the at least one sensor of the device with the single time-stamped series of corresponding environmental property measurements.

In some embodiments, the processor may be configured to compare the time-stamped series of environmental property measurements acquired from the at least one sensor of the device to a plurality of time-stamped series of corresponding environmental property measurements and wherein the processor may be further configured to select a single time-stamped series of corresponding environmental property measurements that most closely matches the time-stamped series of environmental property measurements acquired from the at least one sensor of the device and adjust the time-stamped series of environmental property measurements acquired from the at least one sensor of the device to align the time-stamped series of environmental property measurements acquired from the at least one sensor of the device with the single time-stamped series of corresponding environmental property measurements.

In some embodiments, the processor may be configured to adjust the time-stamped series of environmental property measurements by identifying at least one pattern in the time-stamped series of environmental property measurements acquired from the at least one sensor of the device and detecting the at least one pattern in the single time-stamped series of corresponding environmental property measurements, wherein the processor may be configured to adjust the time-stamped series of environmental property measurements by adjusting the time-stamped series of environmental property measurements acquired from the at least one sensor of the device to align the at least one pattern in the time-stamped series of environmental property measurements with the at least one pattern in the single time-stamped series of corresponding environmental property measurements.

In some embodiments, the processor may be configured to adjust the time-stamped series of environmental property measurements acquired from the at least one sensor of the device in any one or more of time and space. In some embodiments, the processor may be further configured to detect a deviation in the alignment between the aligned time-stamped series of environmental property measurements, wherein the detected deviation may be indicative of the device moving location.

In some embodiments, the processor may be further configured to monitor a level of matching between the compared time-stamped series of environmental property measurements, wherein a decrease in the level of matching may be indicative of the device moving away from the at least one sensor separate from the device and an increase in the level of matching may be indicative of the device moving closer to the at least one sensor separate from the device.

In some embodiments, the at least one sensor of the device may comprise any one or more of a pressure sensor configured to obtain a time-stamped series of environmental pressure measurements, a temperature sensor configured to obtain a time-stamped series of environmental temperature measurements, a humidity sensor configured to obtain a time-stamped series of environmental humidity measurements, and a light sensor configured to obtain a time-stamped series of environmental light measurements.

In some embodiments, the one or more time-stamped series of corresponding environmental property measurements may comprise any one or more of a time-stamped series of corresponding environmental property measurements stored in a database, a time-stamped series of corresponding environmental property measurements provided on a website, and a time-stamped series of corresponding environmental property measurements acquired directly from the sensor separate from the device.

According to a second aspect of the invention, there is provided a method of operating an apparatus comprising at least one processor. The method comprises acquiring, by the processor, a time-stamped series of environmental property measurements from at least one sensor of a device, comparing, by the processor, the time-stamped series of environmental property measurements acquired from the at least one sensor of the device to one or more time-stamped series of corresponding environmental property measurements acquired from at least one sensor that is separate from the device and determining, by the processor, contextual information for the device based on the comparison of the time-stamped series of environmental property measurements.

According to a third aspect of the invention, there is provided a computer program product comprising a computer readable medium, the computer readable medium having computer readable code embodied therein, the computer readable code being configured such that, on execution by a suitable computer or processor, the computer or processor is caused to perform the method or the methods described above.

According to the aspects and embodiments described above, the limitations of existing techniques are addressed. In particular, according to the above-described aspects and embodiments, it is possible to provide a greater range of contextual information on the device, such as in time, in altitude (for example, floor level), in geographic location (for example, in horizontal coordinates), in relation to other devices (and thus, for example, in relation to other people), and so on. This is accomplished through the comparison of time-stamped series of environmental property measurements. Moreover, the need for active interaction of the user is eliminated. There is also no requirement for a specific (wearing) position of the sensor to be implemented. In this way, the above-described aspects and embodiments achieve more reliable contextual information for a device. Also, the method and apparatus is independent of the device having an appropriate built-in communication module that is suitable for providing a time and/or location reference. It is also possible to look back at historical contextual information for the device, rather than only information at a particular instant in time, since the above-described aspects and embodiments use time-stamped series of environmental property measurements. The method and apparatus described herein also conserves power and is user-friendly.

Thus, an improved method and apparatus is achieved for providing contextual information for a device, which overcomes existing problems.

## Brief Description of the Drawings

For a better understanding of the invention, and to show more clearly how it may be carried into effect, reference will now be made, by way of example only, to the accompanying drawings, in which:

Figure 1 is a block diagram of an apparatus according to an embodiment;

Figure 2 is an illustration of a device according to an embodiment;

Figure 3 is an illustration of an apparatus in use according to an embodiment;

Figure 4 is an illustration of a device in use according to an embodiment;

Figure 5 is a flow chart illustrating a method according to an embodiment;

Figures 6A and 6B are graphical illustrations of time-stamped series of environmental property measurements according to an embodiment.

## Detailed Description of the Preferred Embodiments

As noted above, the invention provides a method and apparatus for providing contextual information for a device, which overcomes the existing problems.

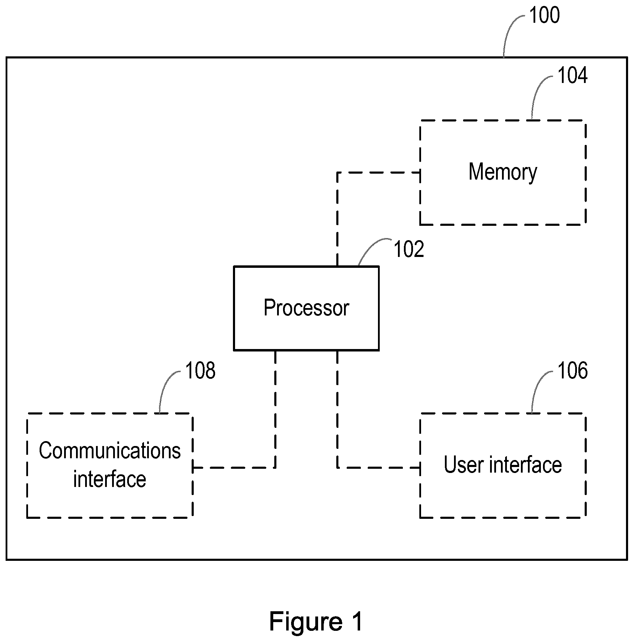

**Figure 1** shows a block diagram of an apparatus 100 according to an embodiment that can be used for providing contextual information for a device.

With reference to Figure 1, the apparatus 100 comprises a processor 102 that controls the operation of the apparatus 100 and that can implement the method described herein. The processor 102 can comprise one or more processors, processing units, multi-core processors or modules that are configured or programmed to control the apparatus 100 in the manner described herein. In particular implementations, the processor 102 can comprise a plurality of software and/or hardware modules that are each configured to perform, or are for performing, individual or multiple steps of the method according to embodiments of the invention.

Briefly, the processor 102 of the apparatus 100 is configured to acquire a time-stamped series of environmental property measurements from at least one sensor of a device and compare the time-stamped series of environmental property measurements acquired from the at least one sensor of the device to one or more time-stamped series of corresponding environmental property measurements acquired from at least one sensor that is separate from the device. The processor 102 of the apparatus 100 is also configured to determine contextual information for the device based on the comparison of the time-stamped series of environmental property measurements.

It will be understood that a time-stamped series is not static or predefined but instead comprises actual measurements acquired from at least one sensor (for example, acquired in real time, near real time, or at the time the measurements occur) to enable a time-stamp to be allocated to the measurements. In this way, the measurements of the time-stamped series have a time reference indicative of the time at which the measurements were actually acquired. A time-stamp allocated to a measurement thus indicates the actual time (or near actual time) at which the at least one sensor acquired or took the measurement. Thus, in certain instances, one or more, or all, of the time-stamps may correspond to an actual (or a real time). However, it may be that all or at least some of the time-stamps are offset from the actual (or real time).

The offset may be a known offset or an unknown offset. In the case of an unknown offset, for example, the device from which the time-stamped series of environmental property measurements is acquired may generate time-stamps derived from an internal clock of the device. The generated time-stamps can, for example, be values generated for the environmental property measurements based on the order in which those measurements are acquired. For example, assuming that the at least one sensor of the device samples the environmental property measurements at a sampling rate of 50Hz, the device generates time-stamps for the environmental property measurements that are 20ms apart. In other words, in this example, each subsequent environmental property measurement has a time-stamp that is 20ms after the time-stamp of the preceding environmental property measurement. In this way, the relation to the actual (or real) time is unknown. In some embodiments, the length of time between time-stamps may be altered or reset.

It will also be understood that the one or more time-stamped series of environmental property measurements acquired from at least one sensor that is separate from the device are "corresponding" in that they relate to the same environmental property as the time-stamped series of environmental property measurements from at least one sensor of the device (for example, both time-stamped series may be a time-stamped series of pressure measurements).

The at least one sensor of the device is an environmental property sensor (such as an atmospheric property sensor). Similarly, the at least one sensor separate from the device is an environmental property sensor (such as an atmospheric property sensor). An environmental property sensor is any sensor suitable to acquire a time-stamped series of environmental property measurements. Examples of an environmental property sensor include, but are not limited to, a pressure sensor (such as a barometric pressure sensor) configured to obtain a time-stamped series of environmental pressure measurements (such as environmental air pressure measurements), a temperature sensor configured to obtain a time-stamped series of environmental temperature measurements, a humidity sensor configured to obtain a time-stamped series of environmental humidity measurements, a light sensor configured to obtain a time-stamped series of environmental light measurements (such as environmental light intensity measurements), or any other environmental property sensor configured to acquire any other time-stamped series of environmental property measurements, or any combination of such sensors.

The one or more time-stamped series of corresponding environmental property measurements can, for example, comprise any one or more of a time-stamped series of corresponding environmental property measurements stored in a database (for example, a database of a memory or an online database such as an online weather database), a time-stamped series of corresponding environmental property measurements on a website, a time-stamped series of corresponding environmental property measurements acquired directly from the at least one sensor separate from the device, or any other time-stamped series of corresponding environmental property measurements, or any combination thereof. In some embodiments, a time-stamped series of corresponding environmental property measurements stored in a database can comprise data from timed logs of local environmental property measurements. In some embodiments, a time-stamped series of corresponding environmental property measurements can comprise an historical log of a time-stamped series of corresponding environmental property measurements.

As illustrated in Figure 1, in some embodiments, the apparatus 100 can comprise a memory 104. Alternatively or in addition to the memory 104 of the apparatus 100, one or more memories 106 may be external to (i.e. separate to or remote from) the apparatus 100. For example, one or more memories 106 may be part of another device. A memory 104 (which can be a memory of the apparatus 100 or an external memory) can be configured to store program code that can be executed by the processor 102 to perform the method described herein. A memory 104 (which can be a memory of the apparatus 100 or an external memory) can be used to store information, data, signals and measurements that are acquired or made by the processor 102 of the apparatus 100 or from any components, units, interfaces, sensors, memories, or devices that are external to the apparatus 100. For example, a memory 104 may be configured to store the determined contextual information. Alternatively or in addition, a memory 104 may be configured to store the time-stamped series of environmental property measurements acquired from at least one sensor of the device. Alternatively or in addition, a memory 104 may comprise a database that stores one or more time-stamped series of corresponding environmental property measurements, as mentioned earlier. The processor 102 may acquire one or more time-stamped series of corresponding environmental property measurements from the database of the memory 104 for processing in accordance with the method described herein. The processor 102 may be configured to control a memory 104 to store information, data, signals and measurements resulting from the method disclosed herein.

According to some embodiments, as illustrated in Figure 1, the apparatus 100 may also comprise at least one user interface 106. Alternatively or in addition, a user interface 106 may be external to (i.e. separate to or remote from) the apparatus 100. For example, a user interface 106 may be part of another device. A user interface 106 may be for use in providing a user with information resulting from the method described herein. The processor 102 may be configured to control one or more user interfaces 106 to provide information resulting from the method according to the invention. For example, in some embodiments, the processor 102 may be configured to control one or more user interfaces 106 to render (or output or provide) the determined contextual information. Alternatively or in addition, the processor 102 may be configured to control one or more user interfaces 106 to render (or output or provide) the time-stamped series of environmental property measurements acquired from at least one sensor of the device, the time-stamped series of corresponding environmental property measurements, or both. A user interface 106 may, alternatively or in addition, be configured to receive a user input. In other words, a user interface 106 may allow the user of the apparatus 100 to manually enter data, instructions, or information. The processor 102 may be configured to acquire the user input from one or more user interfaces 106.

A user interface 106 may be any user interface that enables rendering (or outputting) of information, data or signals to a user of the apparatus 100. Alternatively or in addition, a user interface 106 may be any user interface that enables a user of the apparatus 100 to provide a user input, interact with and/or control the apparatus 100. For example, the user interface 106 may comprise one or more switches, one or more buttons, a keypad, a keyboard, a mouse, a touch screen or an application (for example, on a smart device such as a tablet, a smartphone, or any other smart device), a display or display screen, a graphical user interface (GUI) or any other visual component, one or more speakers, one or more microphones or any other audio component, one or more lights (such as light emitting diode LED lights), a component for providing tactile or haptic feedback (such as a vibration function, or any other tactile feedback component), an augmented reality device (such as augmented reality glasses, or any other augmented reality device), a smart device (such as a smart mirror, a tablet, a smart phone, a smart watch, or any other smart device), or any other user interface, or combination of user interfaces. In some embodiments, the user interface that is controlled to render (or output or provide) information, data or signals of the apparatus 100 may be the same user interface as that which enables the user to provide a user input, interact with and/or control the apparatus 100.

As illustrated in Figure 1, in some embodiments, the apparatus 100 may also comprise a communications interface (or circuitry) 108 for enabling the apparatus 100 to communicate with (or connect to) any components, interfaces, units, memories, sensors and devices that are internal or external to the apparatus 100. For example, the communications interface 108 may be configured to communicate with one or more memories 104 that are internal or external to the apparatus 100. Similarly, the communications interface 108 may be configured to communicate with one or more user interfaces 106 that are internal or external to the apparatus 100. In some embodiments, the communications interface 108 may be configured to communicate with the at least one sensor of the device to acquire the time-stamped series of environmental property measurements. Similarly, in some embodiments, the communications interface 108 may be configured to communicate with one or more of a database (for example, a database of a memory 104), a website, at least one sensor separate from the device, or similar, to acquire the one or more time-stamped series of corresponding environmental property measurements. In any of the embodiments described herein, the communications interface 108 may be configured to communicate with any components, interfaces, units, sensors and devices wirelessly or via a wired connection.

It will be appreciated that Figure 1 only shows the components required to illustrate this aspect of the invention, and in a practical implementation the apparatus 100 may comprise additional components to those shown. For example, the apparatus 100 may comprise a battery or other power supply for powering the apparatus 100 or means for connecting the apparatus 100 to a mains power supply.

According to some embodiments, the apparatus 100 can be separate to the device. For example, the apparatus 100 may be a processing resource within the cloud (for example, on a server in the cloud), a processing resource at a remote location, a processing resource on a separate device (such as a smartphone, a tablet, a personal computer, or any other separate device), a processing resource embedded as a web page script (for example, as part of a web server script such as Personal Home Page PHP or any other web server script), or any other processing resource separate to the device of which a person skilled in the art will be aware. In embodiments where the apparatus 100 is separate to the device, the device can be a closed device in that the method described herein can be performed at the apparatus 100 without the device needing to communicate with the apparatus 100 or any other devices while the device obtains measurements (or data). The measurements (or data) obtained by the device can be exported to the apparatus 100 at any time for subsequent processing.

In other embodiments, the apparatus 100 can be the device itself. For example, the device may comprise the processor 102 configured in the manner described herein.

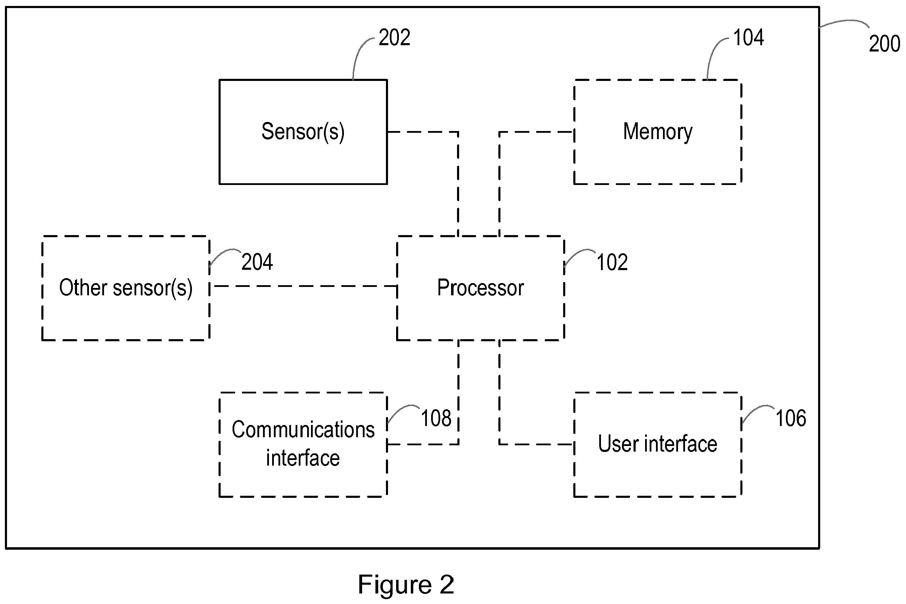

**Figure 2** is an illustration of a device 200 according to an embodiment. With reference to Figure 2, the device 200 comprises at least one sensor 202 configured to acquire a time-stamped series of environmental property measurements.

As mentioned earlier, in some embodiments, the apparatus 100 can be the device 200 itself. Thus, in these embodiments, the device 200 also comprises the processor 102 and may, optionally, comprise any one or more of the memory 104, the user interface 106 and the communications interface (or circuitry) 108 as described above. According to some embodiments, the device 200 can further comprise at least one other sensor 204 configured to obtain one or more measurements (or data) associated with a user of the device 200.

The device 200 can be any device comprising at least one sensor 202 configured to acquire a time-stamped series of environmental property measurements. In some embodiments, the device 200 can be a portable device comprising the at least one sensor 202 configured to acquire a time-stamped series of environmental property measurements. For example, the device 200 may be a mobile device (such as a smart phone, a tablet, a laptop computer, or any other mobile device) comprising the at least one sensor 202 configured to acquire a time-stamped series of environmental property measurements, a wearable device comprising the at least one sensor 202 configured to acquire a time-stamped series of environmental property measurements, or any other portable device comprising the at least one sensor 202 configured to acquire a time-stamped series of environmental property measurements. A wearable device may be any device configured to be worn by a user (for example, a watch such as a smart watch, or any other wearable device). In other embodiments, the device 200 can be a fixed or stationary device (such as a weather station, which can be in a home environment) comprising the at least one sensor 202 configured to acquire a time-stamped series of environmental property measurements. In some embodiments, the device 200 may be configured to attach to, or be positioned on or in, a mode of transport such as a bicycle vehicle (for example, a car), a boat, a plane, or similar.

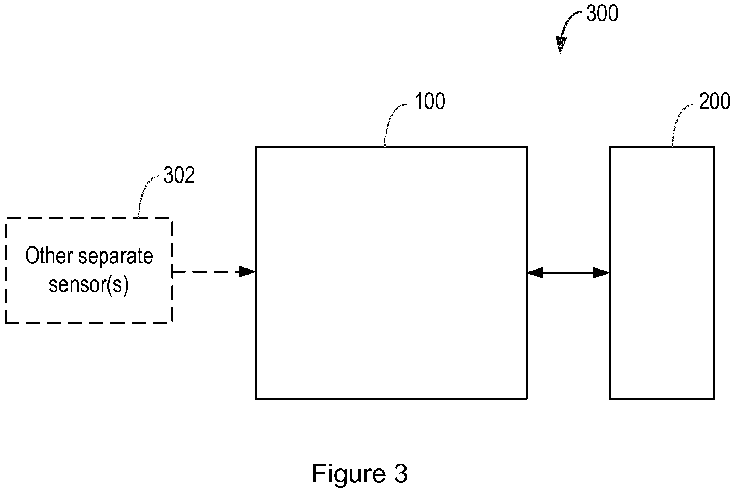

**Figure 3** is an illustration of an apparatus 100 in use according to an embodiment where the apparatus 100 is separate to the device 200. As illustrated in Figure 3, in embodiments where the apparatus 100 is separate to the device 200, the apparatus 100 communicates with the device 200 to acquire a time-stamped series of environmental property measurements from at least one sensor 202 of the device 200. The processor 102 of the apparatus 100 is configured to process the time-stamped series of environmental property measurements acquired from the at least one sensor 202 of the device 200 in the manner described herein.

In some embodiments, as illustrated in Figure 3, the apparatus 100 may also communicate with at least one sensor 302 separate from the device 200. For example, the apparatus 100 may communicate with at least one sensor 302 separate from the device 200 in the embodiments where the one or more time-stamped series of corresponding environmental property measurements comprise one or more time-stamped series of corresponding environmental property measurements acquired directly from the at least one sensor 302 separate from the device 200.

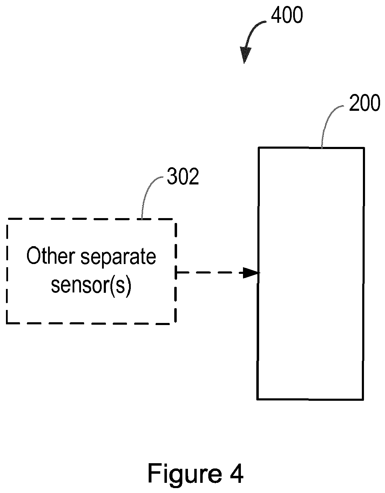

**Figure 4** is an illustration of a device 200 in use according to an embodiment where the apparatus 100 is the device 200 itself. In these embodiments, the processor 102 of the device 200 is configured to acquire a time-stamped series of environmental property measurements from the at least one sensor 202 of the device 200. The processor 102 of the device 200 is configured to process the time-stamped series of environmental property measurements acquired from the at least one sensor 202 of the device 200 in the manner described herein.

In some embodiments, as illustrated in Figure 4, the device 200 may also communicate with at least one sensor 302 separate from the device 200. For example, the device 300 may communicate with at least one sensor 302 separate from the device 200 in the embodiments where the one or more time-stamped series of corresponding environmental property measurements comprise one or more time-stamped series of corresponding environmental property measurements acquired directly from the at least one sensor 302 separate from the device 200.

In any of the embodiments described herein, the at least one sensor 302 separate from the device 200 may comprise a sensor of one or more other devices. The one or more other devices can be any devices separate to the device 200, which also comprise at least one sensor configured to acquire a time-stamped series of environmental property measurements. In some embodiments, the one or more other devices can include one or more portable devices comprising at least one sensor 302 configured to acquire a time-stamped series of environmental property measurements. For example, the one or more other devices can include one or more mobile devices (such as one or more smart phones, tablets, laptop computers, and/or any other mobile devices) comprising at least one sensor 302 configured to acquire a time-stamped series of environmental property measurements. Alternatively or in addition, the one or more other devices may include one or more wearable devices comprising at least one sensor 302 configured to acquire a time-stamped series of environmental property measurements. As mentioned earlier, a wearable device may be any device configured to be worn by a user (for example, a watch such as a smart watch, or any other wearable device). In some embodiments, both the device 200 and the one or more other devices may be worn by the same user. In other embodiments, the one or more other devices can include one or more fixed or stationary devices comprising at least one sensor 302 configured to acquire a time-stamped series of environmental property measurements. In some embodiments, the one or more other devices can include one or more devices attached to, or positioned on or in, a mode of transport such as a bicycle vehicle (for example, a car), a boat, a plane, or similar.

Alternatively or in addition to the at least one sensor 302 separate from the device 200 comprising a sensor of one or more other devices, in any of the embodiments described herein, the at least one sensor 302 separate from the device 200 may comprise (or may further comprise) a sensor of one or more weather stations. In some embodiments, a time-stamped series of corresponding environmental property measurements acquired from a weather station can comprise data from timed logs of local environmental property measurements.

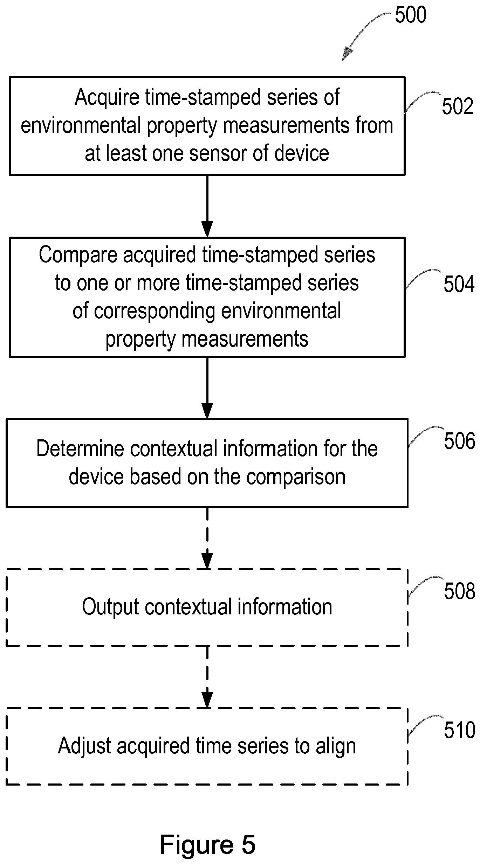

**Figure 5** is a flow chart illustrating a method 500 according to an embodiment for use in operating an apparatus 100 comprising at least one processor 102. More specifically, the method 500 is for use in operating an apparatus 100 to provide contextual information for a device 200. The method 500 is generally performed by or under the control of the processor 102.

At block 502 of Figure 5, a time-stamped series of environmental property measurements from at least one sensor of a device is acquired by the processor 102. As mentioned earlier, the processor 102 of the device 200 is configured to process the time-stamped series of environmental property measurements acquired from the at least one sensor 202 of the device 200 and this processing will now be described.

At block 504 of Figure 5, the time-stamped series of environmental property measurements acquired from the at least one sensor 202 of the device 200 is compared to one or more time-stamped series of corresponding environmental property measurements acquired from at least one sensor 302 that is separate from the device by the processor 102. In some embodiments, a part of the time-stamped series of environmental property measurements may be compared. For example, the time-stamped series of environmental property measurements may be windowed prior to comparing the time-stamped series. In some embodiments, the processor 102 may be configured to perform the comparison of the time-stamped series of environmental property measurements automatically. In some embodiments, the processor 102 may be configured to compare the time-stamped series of environmental property measurements acquired from the at least one sensor 202 of the device 200 to the one or more time-stamped series of corresponding environmental property measurements in time, in space or in both time and space (i.e. in any one or more of time and space).

An example of a comparison technique that may be used by the processor 102 to compare the acquired time-stamped series of environmental property measurements to the one or more time-stamped series of corresponding environmental property measurements is a cross-correlation technique. A cross-correlation technique is a computational method that provides a measure of similarity of two time-stamped series as a function of the displacement of one time-stamped series relative to the other time-stamped series. The higher the cross-correlation, the more similar the time-stamped series are to each other (i.e. the more closely the time-stamped series match or correlate). The measure of similarity may comprise a comparison of the size (or magnitude) of the two time-stamped series, which can include the trend of the time-stamped series. In this example, the cross-correlation will be higher when the two time-stamped series have the same size. Although some examples have been provided for the type of cross-correlation, the skilled person will be aware of suitable cross-correlation techniques that can be employed. It will also be understood that, although a cross-correlation has been provided as an example for a comparison technique that may be used, the skilled person will be aware of other comparisons techniques that may be employed, such as comparison techniques that use matrix form representations, comparison techniques that replace measurements with a rank (or order) for comparison, or other suitable comparison techniques.

In some embodiments, prior to the comparison, the time-stamped series of environmental property measurements acquired from the at least one sensor 202 of the device 200 and the one or more time-stamped series of corresponding environmental property measurements acquired from at least one sensor 302 that is separate from the device may optionally be pre-processed. For example, the time-stamped series of environmental property measurement to be compared may first be adapted into similar physical dimensions (such as into the same scale) For example, the derivatives of the time-stamped series may be acquired (for example, to remove the mean value of the time-stamped time series), dynamic time warping (DTW) may be employed, the time-stamped series may be integrated, the time-stamped series may be normalised (for example, to ensure that the values of a comparison range from -1 to 1 and thus provide an absolute measure of the similarity between the two series), a filter may be applied to the time-stamped series (for example, to remove noise from the time-stamped series or to select a portion of the time-stamped series that is most sensitive to the intended comparison), or any other pre-processing technique may be used. The pre-processing of the time-stamped series can improve the subsequent comparison.

At block 506 of Figure 5, contextual information is determined for the device 200 based on the comparison of the time-stamped series of environmental property measurements at block 504 of Figure 5. More specifically, the processor 102 of the apparatus 100 determines contextual information for the device 200 based on the comparison of the time-stamped series of environmental property measurements.

In some embodiments, the processor 102 of the apparatus 100 may be configured to determine contextual information for the device 200 by determining a relative location of the device 200 to the at least one sensor 302 separate from the device 200 based on the comparison of the time-stamped series of environmental property measurements, a relative time reference for the device 200 to the at least one sensor 302 separate from the device based on the comparison of the time-stamped series of environmental property measurements, or both a relative location of the device 200 to the at least one 302 sensor separate from the device 200 and a relative time reference for the device 200 to the at least one sensor 302 separate from the device 200, each based on the comparison of the time-stamped series of environmental property measurements.

In some embodiments, the relative location may be a relative horizontal location, i.e. a horizontal location of the device 200 relative to the at least one sensor 302 separate to the device 200. In other embodiments, the relative location may be a relative vertical location, i.e. a vertical location of the device 200 relative to the at least one sensor 302 separate to the device 200. In yet other embodiments, the relative location may be a relative horizontal location and a relative vertical location.

In some embodiments, the relative location of the device 200 to the at least one sensor 302 separate from the device 200 can be determined based on the comparison of the time-stamped series by determining a level of matching between the compared time-stamped series. The location of the device 200 relative to the at least one sensor 302 separate from the device 200 is assumed to be proportional to the level of matching and thus the relative location of the device 200 to the at least one sensor 302 separate from the device 200 can be determined proportionally to the level of matching. The closer the device 200 is to the at least one sensor 302 separate from the device 200, the higher the level of matching. Similarly, the further away the device 200 is to the at least one sensor 302 separate from the device 200, the lower the level of matching. In some embodiments, a determined level of matching may be compared to levels of matching stored in a look-up table with corresponding distances. In this way, a physical distance of the device 200 from the at least one sensor 302 separate from the device 200 can be determined. In some embodiments, the determination of the level of matching may comprise determining a correlation coefficient for the compared time-stamped series. The device 200 may be located anywhere on a radius of a circle (or, where the device 200 is above ground level, a sphere) around the at least one sensor 302 separate from the device 200 and this radius is the determined relative location of the device 200 to the at least one sensor 302 separate from the device 200.

In some embodiments, the relative time reference for the device 200 to the at least one sensor 302 separate from the device 200 can be determined based on the comparison of the time-stamped series by determining a time shift between the compared time-stamped series. The time shift between the time-stamped series can be determined from the time-stamps of the time-stamped series.

According to some embodiments, the processor 102 may be configured to acquire location information for the at least one sensor 302 separate from the device 200 and contextual information may be determined for the device 200 by determining an absolute location of the device 200 based on the comparison of the time-stamped series of environmental property measurements and the acquired location information. In some embodiments, the absolute location of the device 200 may be a geographic location of the device 200. For example, the absolute location of the device 200 can be determined to be the same as the location of the at least one sensor 302 separate from the device 200 where the compared time-series are determined to be within a certain level of matching (or correlation). In other words, the absolute location of the device 200 can be a determination that the device 200 is collocated with the at least one sensor 302 separate from the device 200 where the compared time-series are determined to be within a certain level of matching (or correlation). Alternatively or in addition, in some embodiments, the absolute location of the device 200 may be a room within a building in which the device 200 is present. For example, the device 200 can be determined to be in the same room within a building as the at least one sensor 302 separate from the device 200 where the patterns of the compared time-series match.

In embodiments for determining the collocation of the device 200 with the at least one sensor 302 separate from the device 200, the time-stamped series of environmental property measurements acquired from the at least one sensor 202 of the device 200 may first be adjusted in time to align the time-stamped series with the single time-stamped series of corresponding environmental property measurements, prior to the determination of the collocation. In this way, the time-stamps of the two time-stamped series will have the same (or an identical) offset from the actual (or real) time. However, it may be that the actual (or real) time is unknown.

Alternatively or in addition, in some embodiments, the absolute location of the device 200 may be determined as an interpolation estimate of the absolute location of the device 200. For example, the absolute location of the device 200 may be determined by averaging the reference coordinates of the at least one sensors 302 separate from the device 200. Optionally, in averaging the reference coordinates, each of the at least one sensors 302 separate from the device 200 may be weighted by their determined correlation values. For example, the location of each of the at least one sensors 302 separate from the device 200 can be given as $\bar{x}_k$ and the absolute location $\bar{x}$ of the device 200 is to be estimated. This absolute location $\bar{x}$ of the device 200 is estimated by minimising an error criterion, as follows:

$$sum(\rho_k(\bar{x} - \bar{x}_k)^2),$$

where $\rho_k$ is the correlation coefficient between the device 200 and the k$^{th}$ at least one sensor 302 separate from the device 200. Although an example has been provided to determine the absolute location of the device 200, it will be understood that other suitable error criterions and other estimation techniques may alternatively be used and these will be apparent to those skilled in the art.

Alternatively or in addition, in some embodiments, the processor 102 may be configured to acquire time information for the at least one sensor 302 separate from the device 200 and contextual information may be determined for the device 200 by determining an absolute time reference for the device 200 based on the comparison of the time-stamped series of environmental property measurements and the acquired location information. For example, time information for the at least one sensor 302 separate from the device 200 can be attributed to the device 200 where the compared time-stamped series are determined to be within a certain level of matching (or correlation) as this is indicative of the device 200 being near to the at least one sensor 302 separate from the device 200. In this way, information that is known for the at least one sensor 302 separate from the device 200 can be extended to the device 200.

Optionally, at block 508 of Figure 5, the determined contextual information may be output (for example, rendered or displayed). More specifically, the processor 102 may be configured to control the user interface 106 to output (for example, render or display) the determined contextual information, where the user interface 106 can be comprised in the apparatus 100 or external to the apparatus 100.

In embodiments where the processor 102 is configured to compare the time-stamped series of environmental property measurements acquired from the at least one sensor 202 of the device 200 to a single time-stamped series of corresponding environmental property measurements, optionally at block 510 of Figure 5, the time-stamped series of environmental property measurements acquired from the at least one sensor 202 of the device 200 can be adjusted to align the time-stamped series of environmental property measurements with the single time-stamped series of corresponding environmental property measurements. The processor 102 can thus be further configured to adjust the time-stamped series of environmental property measurements in this manner.

Alternatively, in embodiments where the processor 102 is configured to compare the time-stamped series of environmental property measurements acquired from the at least one sensor 202 of the device 200 to a plurality of time-stamped series of corresponding environmental property measurements, a single time-stamped series of corresponding environmental property measurements that most closely (or best) matches the time-stamped series of environmental property measurements acquired from the at least one sensor 202 of the device 200 may first be selected. The processor 102 can thus be further configured to select a single time-stamped series of corresponding environmental property measurements in this manner.

The single time-stamped series of corresponding environmental property measurements that most closely (or best) matches the time-stamped series of environmental property measurements acquired from the at least one sensor 202 of the device 200 may be selected by the processor 102 searching the plurality of time-stamped series of corresponding environmental property measurements to find a match or the closest match to the time-stamped series of environmental property measurements acquired from the at least one sensor 202 of the device 200. In some embodiments, the processor 102 can select the time-stamped series of corresponding environmental property measurements that most closely (or best) matches the time-stamped series of environmental property measurements acquired from the at least one sensor 202 of the device 200 in time, in space or in both time and space.

In embodiments where the processor 102 is configured to search the plurality of time-stamped series of corresponding environmental property measurements to find a match or the closest match in space to the time-stamped series of environmental property measurements acquired from the at least one sensor 202 of the device 200, the time is fixed. For example, where the time is known for the device 200, the search can be focussed on space. Similarly, in embodiments where the processor 102 is configured to search the plurality of time-stamped series of corresponding environmental property measurements to find a match or the closest match in time to the time-stamped series of environmental property measurements acquired from the at least one sensor 202 of the device 200, the space is fixed. For example, where space is known for the device 200, the search can be focussed on time. In some embodiments where space is known for the device 200, instead of searching the plurality of time-stamped series of corresponding environmental property measurement to find a match or the closest match in time for the comparison, the time-stamped series of environmental property measurements may be compared to the time-stamped series of corresponding environmental property measurements acquired from the at least one sensor 302 separate from the device 200 that is known to be closest to the device 200. This can conserve processing resource power, while searching the plurality of time-stamped series of corresponding environmental property measurement to find a match or the closest match for the comparison can improve the accuracy of the contextual information that is subsequently determined.

As mentioned earlier, in some embodiments, the comparison of the time-stamped series of environmental property measurements acquired from the at least one sensor 202 of the device 200 to the time-stamped series of corresponding environmental property measurements can comprise a cross-correlation to provide a measure of similarity between two of the time-stamped series and, the higher the cross-correlation measure, the more closely the time-stamped series match (or correlate). Thus, in these embodiments, the time-stamped series of corresponding environmental property measurements that has the highest cross-correlation measure (at any displacement) can be selected to most closely (or best) match the time-stamped series of environmental property measurements acquired from the at least one sensor 202 of the device 200. In some embodiments, a distance metric (such as the Euclidean distance) may additionally be used to select a single time-stamped series of corresponding environmental property measurements that most closely (or best) matches the time-stamped series of environmental property measurements acquired from the at least one sensor 202 of the device 200.

In some situations, there may be more than one time-stamped series of corresponding environmental property measurements that most closely (or best) matches the time-stamped series of environmental property measurements acquired from the at least one sensor 202 of the device 200 using a certain comparison technique. Thus, in these situations, a different comparison technique (for example, a different similarity measure) may subsequently be applied to select the single time-stamped series of corresponding environmental property measurements that most closely (or best) matches the time-stamped series of environmental property measurements acquired from the at least one sensor of the device. For example, as described above, a cross-correlation measure may first be used followed by a distance metric. Alternatively, a comparison of time-stamped series of a different environmental property measure (for example, temperature instead of pressure) may be performed to select a single time-stamped series of corresponding environmental property measurements that most closely (or best) matches the time-stamped series of environmental property measurements acquired from the at least one sensor of the device 200.

Once a single time-stamped series of corresponding environmental property measurements has been selected, then optionally at block 510 of Figure 5 in these embodiments, the time-stamped series of environmental property measurements acquired from the at least one sensor 202 of the device 200 may be adjusted to align the time-stamped series with the single (selected) time-stamped series of corresponding environmental property measurements. The processor 102 can thus be configured to adjust the time-stamped series of environmental property measurements in this manner.

In any of the embodiments described herein, the processor 102 can further be configured to output (or report) the single time-stamped series of corresponding environmental property measurements. In some embodiments, the output may comprise the single time-stamped series of corresponding environmental property measurements itself. Alternatively or in addition, in some embodiments, the output can comprise an identification (ID) of the sensor 302 separate from the device 200 that acquired the single time-stamped series of corresponding environmental property measurements. In some embodiments, the processor 102 may be configured to control one or more user interfaces 106 to provide (for example, render or display) the output.

In embodiments where the processor 102 of the apparatus 100 is configured to adjust the time-stamped series of environmental property measurements acquired from the at least one sensor 202 of the device 200 to align the time-stamped series with the single time-stamped series of corresponding environmental property measurements, the adjustment can be in time, in space or in both time and space (i.e. in any one or more of time and space) to align the time-stamped series with the single time-stamped series of corresponding environmental property measurements. In some embodiments, the processor 102 of the apparatus 100 can be configured to adjust the time-stamped series of environmental property measurements acquired from the at least one sensor 202 of the device 200 by adjusting the time-stamped series in a manner that aligns the time-stamped series to most closely correspond to the acquired time-stamped series of corresponding environmental property measurements.

For example, in some embodiments, time alignment can comprise adjusting the time-stamps of the time-stamped series of environmental property measurements acquired from the at least one sensor 202 of the device 200 by an offset value (or time displacement) that causes the best match (or highest correlation) of the time-stamped series to the single time-stamped series of corresponding environmental property measurements to occur. The offset value can, for example, be indicative of a time delay (which may be defined in seconds, or any other time unit) or a number of measurements (or samples) by which to adjust the time-stamps of the time-stamped series of environmental property measurements. The adjustment may comprise shifting the time-stamped series of environmental property measurements by the offset value or redefining (or overriding) the time-stamps of time-stamped series of environmental property measurements to account for the offset value and, optionally where time-stamp values are missing, assigning time-stamp values. A similar adjustment can be performed for space alignment, where the time-stamped series of environmental property measurements are adjusted in space instead of time (or in both space and time).

In any of the embodiments described herein, the processor 102 of the apparatus 100 may be configured to identify at least one pattern in the time-stamped series of environmental property measurements acquired from the at least one sensor 202 of the device 200 and detect (or trace) the at least one pattern in the single time-stamped series of corresponding environmental property measurements. In these embodiments, the processor 102 of the apparatus 100 may be configured to adjust the time-stamped series of environmental property measurements by adjusting the time-stamped series of environmental property measurements acquired from the at least one sensor 202 of the device 200 to align the at least one pattern in the time-stamped series of environmental property measurements with the at least one pattern in the single time-stamped series of corresponding environmental property measurements.

The alignment of the time-stamped series of environmental property measurements acquired from the at least one sensor 202 of the device 200 with the single time-stamped series of corresponding environmental property measurements according to the method described herein can be useful in determining contextual information associated with the device (at block 506 of Figure 5). For example, any information (such as the time, space or both time and space information) associated with the aligned time-stamped series of corresponding environmental property measurements can be attributed to the time-stamped series of environmental property measurements acquired from the at least one sensor 202 of the device 200. In some embodiments, for example, data collected by the device 200 can be time-referenced (or time-stamped) and/or geo-localised based on the aligned time-stamped series of corresponding environmental property measurements.

In embodiments where the device 200 further comprises at least one other sensor 204 configured to obtain one or more measurements (or data) associated with a user of the device 200, the processor 102 can be further configured to adjust the one or more obtained measurements associated with the user based on the adjustment to the time-stamped series of environmental property measurements acquired from the at least one sensor 202 of the device 200. The one or more measurements associated with a user of the device 200 can be, for example, inertial measurements (such as measurements from accelerometers, gyroscopes or any other inertial sensor), log data, physiological characteristic measurements (such as heart rate, respiration rate, or any other physiological characteristic measurements), data from a vehicle in which the user is present, biometric data, or any other measurements associated with a user of the device 200. In embodiments where the apparatus 100 is separate to the device 200, the measurements (or data) obtained by the device can be exported to the apparatus 100 at any time to be adjusted in the manner described herein. In some embodiments, the aligned time-stamped series of corresponding environmental property measurements can be used to associate and location to the one or more measurements associated with a user of the device 200 obtained from the at least one other sensor 204.

The attribution of information associated with the aligned time-stamped series of corresponding environmental property measurements to the time-stamped series of environmental property measurements acquired from the at least one sensor 202 of the device 200 can be particularly valuable where there is no information (for example, no time, space or both time and space information) available for the time-stamped series of environmental property measurements acquired from the at least one sensor 202 of the device 200. For example, in any of the embodiments described herein, the processor 102 may be configured to correct for possible missing environmental property measurements in the time-stamped series of environmental property measurements acquired from the at least one sensor 202 of the device 200 or gaps in the environmental property measurements in the time-stamped series of environmental property measurements acquired from the at least one sensor 202 of the device 200 based on the aligned time-stamped series of corresponding environmental property measurements. For example, it can be assumed that a missing environmental property measurement of the time-stamped series of environmental property measurements acquired from the at least one sensor 202 of the device 200 is the same as a corresponding environmental property measurement in the aligned time-stamped series of corresponding environmental property measurements.

In some embodiments, following alignment, the device 200 may itself become a reference source for alignment of other (for example, nearby) devices. For example, the device 200 may become a reference source for alignment where the time-series of environmental property measurements acquired by the at least one sensor 202 of the device 200 are associated with global positioning system (GPS) data or location data.

In any of the embodiments described herein where the processor 102 is configured to align the time-stamped series of environmental property measurements acquired from the at least one sensor 202 of the device 200 with the single time-stamped series of corresponding environmental property measurements, the processor 102 can be further configured to detect a deviation in the alignment between the aligned time-stamped series of environmental property measurements. In these embodiments, the detected deviation is indicative of the device 200 moving location. In some embodiments, the detected deviation may be indicative of the device 200 entering or leaving a building or a room in a building.

In any of the embodiments described herein, the processor 102 of the apparatus 100 may be further configured to monitor the level of matching between the compared time-stamped series of environmental property measurements. As described earlier, the level of matching may comprise a determination of a correlation coefficient for the compared time-stamped series of environmental property measurements. In embodiments where the level of matching is monitored, a difference in the time-stamped series of environmental property measurements acquired from the at least one sensor 202 of the device 200 and the single time-stamped series of corresponding environmental property measurements can be indicative of the proximity of the device 200 to the at least one sensor 302 separate from the device 200. For example, a decrease in the level of matching is indicative of the device 200 moving away (or detaching) from the at least one sensor 302 separate from the device 200 and an increase in the level of matching is indicative of the device 200 moving closer to or entering the same environment (for example, the same room) as the at least one sensor 302 separate from the device 200. In some embodiments, a sudden miss-match in the time-stamped series of environmental property measurements acquired from the at least one sensor 202 of the device 200 and the single time-stamped series of corresponding environmental property measurements can be indicative of the device being misplaced or stolen. This may be confirmed by other sensors and the device 200 may be automatically geo-localised and found. In some embodiments, a temporary exact (or almost exact) match in the time-stamped series of environmental property measurements acquired from the at least one sensor 202 of the device 200 and the single time-stamped series of corresponding environmental property measurements can be indicative that the device 200 and the at least one other sensor 302 are moving together (such as in the same car, same elevator, or similar). This may be confirmed by other sensors and the device 200 may also be automatically geo-localised.

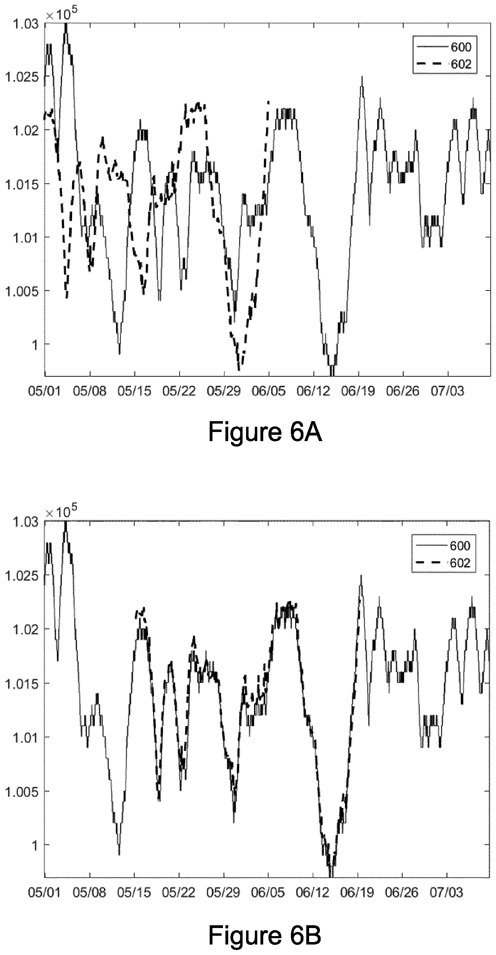

**Figures 6A and 6B** are graphical illustrations of a time-stamped series of environmental property measurements according to an example embodiment. Specifically, Figures 6A and 6B illustrate an example of an acquired time-stamped series 602 of environmental property measurements acquired from at least one sensor 202 of a device 200 and a single time-stamped series 600 of corresponding environmental property measurements acquired from at least one sensor 302 separate from the device 200, before alignment (Figure 6A) and after alignment (Figure 6B) according to the method described herein.

In this example embodiment, the acquired time-stamped series 602 of environmental property measurements is a time-stamped series of air pressure measurements and the single time-stamped series 600 of corresponding environmental property measurements is a time-stamped series of air pressure measurements acquired from a weather station, which is the area where the device 200 is located. It can be seen from Figures 6A and 6B that the time-stamped series are aligned such that the best correlation occurs between the time-series occurs. In this example embodiment, the time-stamped series are aligned by shifting the acquired time-stamped series 602 of environmental property measurements from the at least one sensor 202 of the device 200 over the single time-stamped series 600 of corresponding environmental property measurements until the point at which the time-series correlate to the highest degree. In this way, the most accurate contextual information for the device 200 can be determined through the attribution of information associated with the single time-stamped series 600 of corresponding environmental property measurements to the acquired time-stamped series 602 of environmental property measurements from the at least one sensor 202 of the device 200.

Therefore, there is provided herein an improved method and apparatus 100 for providing contextual information for a device 200. According to the method and apparatus 100 described herein, it is possible to provide a greater range of contextual information on the device 200 through the comparison of a time-stamped series of variable environmental property measurements. Moreover, the need for active intervention of the user is eliminated. There is also no requirement for a specific (wearing) position of the sensor 202 of the device 200 to be implemented. In this way, more reliable information can be provided about the device 200. Also, the method and apparatus 100 described herein is independent of the device 200 having an appropriate built-in communication module communication module that is suitable for providing a time reference. It is also possible to determine historical contextual information for the device 200, rather than only information at a particular instant in time through the use of time-stamped series of environmental property measurements in the manner described herein.

The method and apparatus 100 described herein can be particularly useful for devices 200 with no internal clock and/or no geo-localisation system. The method and apparatus 100 described herein can be useful in monitoring or coaching applications, such as where the device 200 is a senior mobility monitor (SMM) or any other monitoring device. The method and apparatus 100 described herein can also be useful in monitoring social activities by allowing the detection of joint behaviours of different users (for example, promoting joint activities where multiple users spend time together). The method and apparatus 100 described herein can also be used to detect non-wearing time of a wearable device (where the non-wearing time is the time during which the time-stamped series acquired from two wearable devices worn by the same user do not match).

There is also provided a computer program product comprising a computer readable medium, the computer readable medium having computer readable code embodied therein, the computer readable code being configured such that, on execution by a suitable computer or processor, the computer or processor is caused to perform the method or methods described herein. The computer program product may, in some embodiments, comprise a web browser or application on mobile device.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

**Claims**

1. An apparatus (100), comprising:

   a processor (102) configured to:

      acquire a time-stamped series of environmental property measurements from at least one sensor (202) of a device (200); compare the time-stamped series of environmental property measurements acquired from the at least one sensor (202) of the device (200) to one or more time-stamped series of corresponding environmental property measurements acquired from at least one sensor (302) that is separate from the device (200); and determine contextual information for the device (200) based on the comparison of the time-stamped series of environmental property measurements.

2. An apparatus (100) as claimed in claim 1, wherein the processor (102) is configured to compare the time-stamped series of environmental property measurements acquired from the at least one sensor (202) of the device (200) to the one or more time-stamped series of corresponding environmental property measurements in any one or more of time and space.

3. An apparatus (100) as claimed in any one of claims 1 or 2, wherein the processor (102) is configured to determine contextual information for the device (200) by determining any one or more of:

      a relative location of the device (200) to the at least one sensor (302) separate from the device (200) based on the comparison of the time-stamped series of environmental property measurements; and a relative time reference for the device (200) to the at least one sensor (302) separate from the device (200) based on the comparison of the time-stamped series of environmental property measurements.

4. An apparatus (100) as claimed in claim 3, wherein the relative location is a relative horizontal location.

5. An apparatus (100) as claimed in any one of the preceding claims, wherein:

      the processor (102) is further configured to:

      acquire location information for the at least one sensor (302) separate from the device (200); and determine contextual information for the device (200) by determining an absolute location of the device (200) based on the comparison of the time-stamped series of environmental property measurements and the acquired location information; and/or

   the processor (102) is further configured to:

      acquire time information for the at least one sensor (302) separate from the device (200); and determine contextual information for the device (200) by determining an absolute time reference for the device (200) based on the comparison of the time-stamped series of environmental property measurements and the acquired time information.

6. An apparatus (100) as claimed in any one of the preceding claims, wherein the processor (102) is configured to:

      compare the time-stamped series of environmental property measurements acquired from the at least one sensor (202) of the device (200) to a single time-stamped series of corresponding environmental property measurements; and wherein the processor (102) is further configured to:

      adjust the time-stamped series of environmental property measurements acquired from the at least one sensor (202) of the device (200) to align the time-stamped series of environmental property measurements acquired from the at least one sensor (202) of the device (200) with the single time-stamped series of corresponding environmental property measurements.

7. An apparatus (100) as claimed in any one of claims 1 to 5, wherein the processor (102) is configured to:

      compare the time-stamped series of environmental property measurements acquired from the at least one sensor (202) of the device (200) to a plurality of time-stamped series of corresponding environmental property measurements; and wherein the processor (102) is further configured to:

      select a single time-stamped series of corresponding environmental property measurements that most closely matches the time-stamped series of environmental property measurements acquired from the at least one sensor (202) of the device (200); and

adjust the time-stamped series of environmental property measurements acquired from the at least one sensor (202) of the device (200) to align the time-stamped series of environmental property measurements acquired from the at least one sensor (202) of the device (200) with the single time-stamped series of corresponding environmental property measurements.

8. An apparatus (100) as claimed in any one of claims 6 or 7, wherein the processor (102) is configured to adjust the time-stamped series of environmental property measurements by:

identifying at least one pattern in the time-stamped series of environmental property measurements acquired from the at least one sensor (202) of the device (200);
detecting the at least one pattern in the single time-stamped series of corresponding environmental property measurements; and

wherein the processor (102) is configured to adjust the time-stamped series of environmental property measurements by:

adjusting the time-stamped series of environmental property measurements acquired from the at least one sensor (202) of the device (200) to align the at least one pattern in the time-stamped series of environmental property measurements with the at least one pattern in the single time-stamped series of corresponding environmental property measurements.

9. An apparatus (100) as claimed in any one of claims 6 to 8, wherein the processor (102) is configured to adjust the time-stamped series of environmental property measurements acquired from the at least one sensor (202) of the device (200) in any one or more of time and space.

10. An apparatus (100) as claimed in any one of claims 6 to 9, wherein the processor (102) is further configured to:

detect a deviation in the alignment between the aligned time-stamped series of environmental property measurements, wherein the detected deviation is indicative of the device (200) moving location.

11. An apparatus (100) as claimed in any one of the preceding claims, wherein the processor (102) is further configured to:

monitor a level of matching between the compared time-stamped series of environmental property measurements,
wherein a decrease in the level of matching is indicative of the device (200) moving away from the at least one sensor (302) separate from the device (200) and an increase in the level of matching is indicative of the device (200) moving closer to the at least one sensor (302) separate from the device (200).

12. An apparatus (100) as claimed in any one of the preceding claims, wherein the at least one sensor (202) of the device (200) comprises any one or more of:

a pressure sensor configured to obtain a time-stamped series of environmental pressure measurements;
a temperature sensor configured to obtain a time-stamped series of environmental temperature measurements;
a humidity sensor configured to obtain a time-stamped series of environmental humidity measurements; and
a light sensor configured to obtain a time-stamped series of environmental light measurements.

13. An apparatus (100) as claimed in any one of the preceding claims, wherein the one or more time-stamped series of corresponding environmental property measurements comprise any one or more of:

a time-stamped series of corresponding environmental property measurements stored in a database;
a time-stamped series of corresponding environmental property measurements provided on a website; and
a time-stamped series of corresponding environmental property measurements acquired directly from the sensor (302) separate from the device (200).

14. A method (500) of operating an apparatus (100) comprising at least one processor (102), the method comprising:

acquiring (502), by the processor (102), a time-stamped series of environmental property measurements from at least one sensor (202) of a device (200);
comparing (504), by the processor (102), the time-stamped series of environmental property measurements acquired from the at least one sensor (202) of the device (200) to one or more time-stamped series of corresponding environmental property measurements acquired from at least one sensor (302) that is separate from the device (200); and

determining (506), by the processor (102), contextual information for the device (200) based on the comparison of the time-stamped series of environmental property measurements.

15. A computer program product comprising a computer readable medium, the computer readable medium having computer readable code embodied therein, the computer readable code being configured such that, on execution by a suitable computer or processor, the computer or processor is caused to perform the method of claim 14.

Figure 1

Figure 2

EP 3 399 278 A1

Figure 3

400

200

302

┌ ─ ─ ─ ─ ─ ─ ─ ┐
│ Other separate │
│ sensor(s) │
└ ─ ─ ─ ─ ─ ─ ─ ┘

## Figure 4

500

Acquire time-stamped series of
environmental property measurements from
at least one sensor of device

502

Compare acquired time-stamped series
to one or more time-stamped series
of corresponding environmental
property measurements

504

Determine contextual information for the
device based on the comparison

506

Output contextual information

508

Adjust acquired time series to align

510

Figure 5

Figure 6A

Figure 6B

Europäisches
Patentamt

European
Patent Office

Office européen
des brevets

## EUROPEAN SEARCH REPORT

Application Number

EP 17 16 9787

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/323160 A1 (VENKATRAMAN SAI PRADEEP [US] ET AL) 30 October 2014 (2014-10-30) * figures 3-4 * * paragraphs [0028], [0044], [0050] - [0052], [0055], [0059] * ----- | 1-9, 12-15 | INV. G01C21/20 |
| X | US 2014/172365 A1 (HANNEBUTTE ULF R [US]) 19 June 2014 (2014-06-19) * paragraphs [0010], [0017] - [0018], [0020] - [0025] * * figures 2-4 * ----- | 1-4, 10-15 | |

TECHNICAL FIELDS SEARCHED (IPC)

G01C

The present search report has been drawn up for all claims

| Place of search | Date of completion of the search | Examiner |
|---|---|---|
| The Hague | 30 October 2017 | Faivre, Olivier |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.........................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 17 16 9787

This annex lists the patent family members relating to the patent documents cited in the above-mentioned European search report.
The members are as contained in the European Patent Office EDP file on
The European Patent Office is in no way liable for these particulars which are merely given for the purpose of information.

30-10-2017

| Patent document cited in search report | Publication date | Patent family member(s) | Publication date |
|---|---|---|---|
| US 2014323160 A1 | 30-10-2014 | CN 105190241 A | 23-12-2015 |
| | | EP 2989420 A1 | 02-03-2016 |
| | | JP 2016526151 A | 01-09-2016 |
| | | KR 20160002959 A | 08-01-2016 |
| | | US 2014323160 A1 | 30-10-2014 |
| | | WO 2014176464 A1 | 30-10-2014 |
| US 2014172365 A1 | 19-06-2014 | NONE | |

For more details about this annex : see Official Journal of the European Patent Office, No. 12/82

**EP 3 399 278 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20160245716 A